# EUROPEAN PATENT APPLICATION

(11) **EP 2 336 932 A2**
(43) Date of publication of application: **22.06.2011**
(21) Application number: 10187283.6
(22) Date of filing: 12.10.2010
(51) Int. Cl.: G06F 21/00, G06F 3/048, H04L 29/06, H04W 48/18

(54) **Data card, method and system for identifying fingerprint with data card**

(30) Priority: 16.11.2009 CN 200910109728; 11.06.2010 WO PCT/CN2010/073785; 16.10.2009 CN 200910110532
(71) Applicant: Huawei Device Co., Ltd., Longgang District Shenzhen Guangdong 518129 (CN)
(72) Inventor: Fan, Rui, Shenzhen Guangdong 518129, (CN)
(74) Representative: Barth, Stephan Manuel

(57) **Abstract**

A datacard, and a method and system for identifying a fingerprint with datacard in the field of electronic communications are provided. The datacard includes: a fingerprint collection module, adapted to collect a user's fingerprint information by using a fingerprint scanner on the datacard; a fingerprint authentication module, adapted to compare the collected fingerprint information with a stored fingerprint template and output a comparison result; a control module, adapted to control the datacard according to the comparison result outputted by the fingerprint authentication module. Therefore, the use of the datacard is controlled through fingerprint authentication, security of the use of the datacard is improved, and it is effectively ensured that the datacard is not misappropriated.

## Description

### FIELD OF THE TECHNOLOGY

The present invention relates to the field of communication technology, and more particularly to a data card, and a method and a system for identifying fingerprint with a data card.

### BACKGROUND OF THE INVENTION

A data card, also known as a wireless network card, a broadband network card, a USB modem, is an Internet access equipment for accessing a wireless network. The data card can access the wireless network through mobile communication technologies such as the Global System for Mobile communications (GSM), the Universal Mobile Telecommunication System (UMTS) or the Code Division Multiple Access (CDMA), so as to realize functions such as voice, short messages, and data services. The main function of the data card is to connect to the Internet through dial-up for data services (commonly known as accessing the Internet).

With the rapid development of the mobile communication technology, data services such as wireless Internet access are gradually becoming mature, and portable and small-size wireless Internet access terminals such as a wireless data card are becoming increasingly popular. The wireless data card does not need a power charger, and can be supplied by directly plugging into a universal serial bus (USB) port of a notebook computer or a desktop computer. With just one Subscriber Identity Module (SIM) card, a user can have data services such as wireless Internet access without a network cable, so as to enjoy the Internet anytime and anywhere.

The current wireless data card has security deficiencies. An SIM card has a few simple protective measures, namely, the user can set a simple combination of numbers from 0 to 9 as a personal identification number (PIN) code, and the SIM card can only be used after the PIN code is inputted. In this mode, the password is simple, and the user only needs to input numbers to access Internet by using the data card.

In the implementation of the present invention, the inventor finds that the prior art has the following problems. The requirements for setting the PIN code of the SIM card confined to numbers are simple, so that the PIN code can be easily cracked, resulting in low security.

### SUMMARY OF THE INVENTION

In one aspect of embodiments, the present invention provides a fingerprint identification datacard, and in another aspect of the embodiments, the present invention provides a method for identifying fingerprint with datacard, which can improve the security of the use of the datacard, and effectively ensure that the datacard is not misappropriated.

In an embodiment, the present invention provides a datacard, which includes a fingerprint collection module, a fingerprint authentication module, and a control module.

The fingerprint collection module is adapted to collect a user's fingerprint information by using a fingerprint scanner on the datacard.

The fingerprint authentication module is adapted to compare the collected fingerprint information with a stored fingerprint template, and output a comparison result.

The control module is adapted to control the datacard according to the comparison result outputted by the fingerprint authentication module.

In an embodiment, the present invention further provides a wireless Internet access equipment, which includes a registration module, a fingerprint identification module, and a processing module.

The registration module is adapted to register the wireless Internet access equipment with the wireless network.

The fingerprint identification module is adapted to obtain fingerprint information inputted by the user by using a fingerprint sensor, and match the inputted fingerprint information with a stored fingerprint template after the registration module finishes registration.

The processing module is adapted to perform a dial-up connection, and establish a data service connection between the wireless Internet access equipment and the wireless network when the inputted fingerprint information successfully matches with the stored fingerprint template in the fingerprint identification module.

In an embodiment, the present invention further provides a method for identifying fingerprint with datacard, which includes the following steps.

A user's fingerprint information is collected by using a fingerprint scanner on the datacard.

The collected fingerprint information is compared with a stored fingerprint template, and a comparison result is outputted.

The datacard is controlled according to the outputted comparison result.

Furthermore, in an embodiment, the present invention further provides a dial-up method for accessing wireless Internet, which includes the following steps.

A wireless Internet access equipment is registered with a wireless network.

Fingerprint information inputted by the user is obtained by using a fingerprint sensor.

The inputted fingerprint information is matched with a stored fingerprint template.

If the inputted fingerprint information successfully matches with the stored fingerprint template, the wireless Internet access equipment performs a dial-up connection, and establishes a data service connection with the wireless network.

It can be known from the above technical solutions that, the user's fingerprint information is collected by using the fingerprint scanner on the datacard and compared with the stored fingerprint template, the comparison result is outputted, and then the datacard is controlled according to the outputted comparison result. Therefore, the use of the datacard is controlled through the fingerprint authentication, and the datacard can only be used after successful fingerprint matching. As the security of fingerprint authentication is much higher than the security of password authentication, the security of the datacard is improved, and it is effectively ensured that the datacard is not misappropriated.

### BRIEF DESCRIPTION OF THE DRAWINGS

To make the technical solution under the present invention clearer, the accompanying drawings for illustrating the embodiments of the present invention or the prior art are outlined below. Apparently, the accompanying drawings are for the exemplary purpose only, and person having ordinary skill in the art can derive other drawings from such accompanying drawings without any creative effort.
FIG. 1 is a flow chart of a method for identifying fingerprint with a data card according to an embodiment of the present invention;
FIG. 2 is a flow chart of a dial-up method for accessing wireless Internet according to an embodiment of the present invention;
FIG. 3 is a flow chart of a dial-up method for accessing wireless Internet according to another embodiment of the present invention;
FIG. 4 is a flow chart of a dial-up method for accessing wireless Internet according to another embodiment of the present invention;
FIG. 5 is a schematic structural view of a data card according to an embodiment of the present invention;
FIG. 6 is a schematic structural view of a dial-up equipment for accessing wireless Internet according to an embodiment of the present invention;
FIG. 7 is a schematic structural view of another dial-up equipment for accessing wireless Internet according to an embodiment of the present invention; and
FIG. 8 is a schematic view of a dial-up system for accessing wireless Internet according to an embodiment of the present invention.

### DETAILED DESCRIPTION OF THE EMBODIMENTS

The technical solution under the present invention is elaborated below with reference to accompanying drawings. Evidently, the embodiments described below are for the exemplary purpose only, without covering all embodiments of the present invention. Those skilled in the art can derive other embodiments from the embodiments given herein without making any creative effort, and all such embodiments are covered in the protection scope of the present invention.

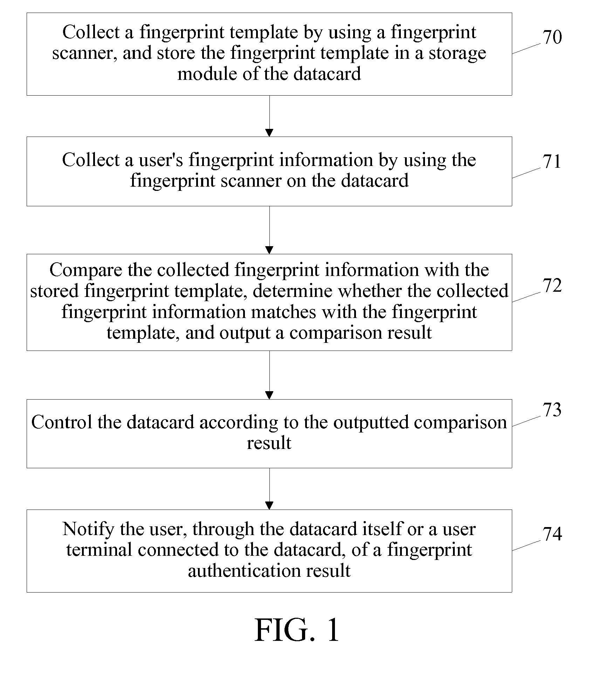

Method Embodiment:
As shown in FIG. 1, the present invention provides a method for identifying fingerprint with a data card, which includes the following steps.

In Step 71, a user's fingerprint information is collected by using a fingerprint scanner on the data card.

In Step 72, the collected fingerprint information is compared with a stored fingerprint template, so as to determine whether the collected fingerprint information matches with the fingerprint template, and then a comparison result is outputted.

In Step 73, the data card is controlled according to the outputted comparison result.

The data card establishes a wireless connection with the Internet through a radio frequency (RF) module to receive and transmit data. The data card is connected to a user terminal through various interfaces (such as a universal serial bus, USB, interface), so that the user terminal can perform data transmission with the Internet through the data card.

The corresponding control in Step 73 may include the following steps. The user is authenticated through fingerprint authentication. If the collected fingerprint information matches with the fingerprint template, it is determined that the authentication is successful, and the user corresponding to the collected fingerprint information is allowed to access the Internet by using the data card. Otherwise, if the collected fingerprint information does not match with the fingerprint template, it is determined that the authentication is failed, and the user is not allowed to use the data card. And/or, one or more different fingerprint templates are stored, and each fingerprint template corresponds to different operations. If the collected fingerprint information matches with any one of the fingerprint templates, the operation corresponding to the matched fingerprint template is performed. If the collected fingerprint information matches with none of the fingerprint templates, the data card performs no operation or notifies the user that the fingerprint authentication is failed through the data card or the user terminal connected to the data card. As for the implementation that the user corresponding to the collected fingerprint information is allowed to access the Internet by using the data card, and the implementation of the operations corresponding to the matched fingerprint templates, the related content in the device embodiment can be referred to, which will not be described here again.

It should be noted that, for a multi-mode data card, the user can choose different Internet services by registering different fingerprint templates. For example, for a data card that supports both the Global System for Mobile Communications (GSM) and the Wideband Code Division Multiple Access (WCDMA), the user registers the left index finger to initiate the GSM network, and registers with the right index finger to initiate the WCDMA network. After inserting the data card, the user swipes the left index finger to initiate the RF module of the GSM, and at this time, the GSM network can be searched and registered. Similarly, the user swipes the right index finger to initiate the RF module of the WCDMA to use the WCDMA network.

In addition, after Step 73, the above method may further include Step 74. A notification is sent through the data card or the user terminal connected to the data card to notify the user of the fingerprint authentication result. Here, the user's fingerprint authentication result may be: the fingerprint authentication is successful; the fingerprint authentication is successful, and the data card has established a connection with the Internet; the fingerprint authentication is successful, and the data card has established a connection with the Internet through one of the multiple RF modules; the fingerprint authentication is failed, and the user cannot use the data card; the fingerprint authentication is failed, and the user is required to input the fingerprint information again.

In addition, before Step 71, the above method may further include Step 70. When the data card is set, a fingerprint template is collected by using the fingerprint scanner and stored in a storage module of the data card. The storage module may be a memory or a non-volatile memory such as a Flash. For example, when the user initiates the data card for the first time, the data card prompts the user to input each fingerprint template, and the fingerprint information inputted by using the fingerprint scanner is stored in the storage module as a fingerprint template. Alternatively, during the use of the data card, the original fingerprint template is updated and replaced, and the fingerprint information inputted by using the fingerprint scanner at this time is stored in the storage module to replace the original fingerprint template. Before the update and replacement, it can be set that the user needs to input the correct fingerprint information and the update and replacement is only allowed after the authentication of the fingerprint authentication is successful.

It should be noted that, if the data card has only one RF module, when the data card is powered on, the RF module immediately starts to search and register with the network, and the user is not allowed to use the data card. Next, after the fingerprint authentication is successful (that is, the collected fingerprint information matches with the fingerprint template), the user is allowed to use the data card to perform data transmission through the wireless network connected by the RF module. Alternatively, when the data card is powered on, the user is not allowed to use the data card and the RF module is in an "off' state. Next, after the fingerprint authentication is successful, the RF module starts to search and register with the network and the user is allowed to use the data card. In the end, the user can perform data transmission through the wireless network connected by the RF module.

In this embodiment, the user's fingerprint information is collected by using the fingerprint scanner on the data card and compared with the stored fingerprint template, then the data card is controlled according to the comparison result outputted by the fingerprint authentication module. Thus, the authentication of the data card is realized through the fingerprint authentication, and related functions of the data card can only be used after successful fingerprint matching. As the security of the fingerprint authentication is much higher than the security of password authentication, the security of the data card is improved, and it is effectively ensured that the data card is not misappropriated. In addition, the fingerprint authentication is performed for the data card, so even if the user changed an SIM card, the data card still cannot be used as long as the fingerprint authentication is failed, so that the security of the data card is further improved. Moreover, the user does not need to remember a password when during fingerprint authentication, and a network connection is automatically established upon successful fingerprint authentication, so that it becomes more convenient for the user and the complexity of the operations is reduced.

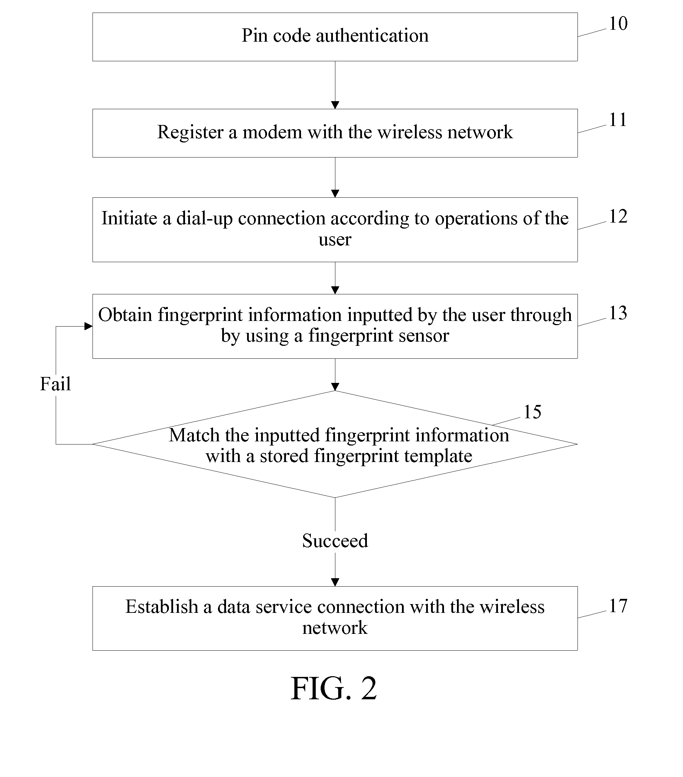

FIG. 2 illustrates a dial-up method of a wireless Internet access equipment (such as a wireless network card) according to an embodiment of the present invention. In this embodiment, the present invention provides a dial-up method for accessing wireless Internet, which includes the following steps.

In Step 11, the wireless Internet access equipment is registered with the wireless network.

In Step 11, after being powered up, the wireless Internet access equipment can register itself with the wireless network by using the existing technologies. The wireless network here may be 2G or Third Generation (3G) wireless networks such as GSM, CDMA, and UMTS. The wireless Internet access equipment is electrically connected to a PC.

In Step 13, fingerprint information inputted by the user is obtained by using a fingerprint sensor.

The fingerprint sensor may be integrated in the wireless Internet access equipment, or disposed on the PC, or disposed in other equipment (such as a separated USB fingerprint sensor) and connected to the PC through various interfaces. After obtaining the fingerprint information inputted by the user, the fingerprint sensor sends the fingerprint information to a related module or equipment to be matched.

In Step 15, the inputted fingerprint information is matched with a stored fingerprint template. If the inputted fingerprint information successfully matches with the stored fingerprint template, Step 17 is performed. If the inputted fingerprint information does not match with the stored fingerprint template, the process returns to Step 13. When the user inputs fingerprint information next time, the fingerprint information inputted by the user is obtained by the fingerprint sensor.

In Step 15, the wireless Internet access equipment or the PC can match the fingerprint information with the fingerprint template. For example, when the fingerprint template is stored in the wireless Internet access equipment, the wireless Internet access equipment receives the fingerprint information sent by the fingerprint sensor. Next, the fingerprint information is matched with the stored fingerprint template, and a matching result is sent to the PC for subsequent processes or subsequent processes are directly performed according to the matching result. Alternatively, when the fingerprint template is stored in the wireless Internet access equipment, the PC receives the fingerprint information sent by the fingerprint sensor and reads the fingerprint template from the wireless Internet access equipment. Next, the PC matches the received fingerprint information with the read fingerprint template, and subsequent processes are performed according to the matching result or the matching result is sent to the wireless Internet access equipment for subsequent processes. Alternatively, when the fingerprint template is stored in the PC, the wireless Internet access equipment receives the fingerprint information sent by the fingerprint sensor and reads the fingerprint template from the PC. Next, the wireless Internet access equipment matches the received fingerprint information with the read fingerprint template, and the matching result is sent to the PC for subsequent processes or subsequent processes are performed according to the matching result. Alternatively, when the fingerprint template is stored in the PC, the PC receives the fingerprint information sent by the fingerprint sensor and reads the fingerprint template from the wireless Internet access equipment. Next, the PC matches the received fingerprint information with the stored fingerprint template, and subsequent processes are performed according to the matching result, or the matching result is sent to the wireless Internet access equipment for subsequent processes.

In Step 17, the wireless Internet access equipment performs a dial-up connection and establishes a data service connection with the wireless network.

After establishing the data service connection, the wireless Internet access equipment may perform data service interaction with the wireless network, that is, the PC may access the Internet by using the wireless Internet access equipment.

Optionally, if the wireless Internet access equipment is a datacard, referring to FIG. 2, before Step 11, the dial-up method of the wireless Internet access equipment may further include Step 10: After the datacard is powered up, PIN code authentication is performed. If the PIN code authentication is successful, Step 11 is performed. Otherwise, if the PIN code authentication is failed, all the SIM-related functions (including the dial-up connection function) of the datacard cannot be used, and the above process is terminated or it is notified that the PIN code authentication is failed so that the user inputs the PIN code again.

Optionally, referring to FIG. 2, after Step 11, the method may further include Step 12: A dial-up connection is initiated according to operations of the user, and the user is prompted to input fingerprint information. In the actual operations, the process of the dial-up connection includes two steps. First, a dial-up command is delivered to the wireless Internet access equipment. Second, the wireless Internet access equipment establishes a data service connection with the wireless network according to the dial-up command and dial-up connection settings. Here, the initiation of the dial-up connection in Step 12 may be that the PC delivers a dial-up command to the wireless Internet access equipment. Specifically, the delivery of the dial-up command may be that background software installed in the PC sends the dial-up command to the wireless Internet access equipment through the connection to the wireless Internet access equipment. For example, the background software sends the dial-up command to the wireless Internet access equipment by invoking an Application Programming Interface (API) of a dial-up connector of Windows. The prompting the user to input fingerprint information is optional and may be implemented in various modes, such as popping-up a prompt dialog box in the system of the PC, which is not limited here. The prompting the user to input fingerprint information in other steps is similar to Step 12, which will not be described again.

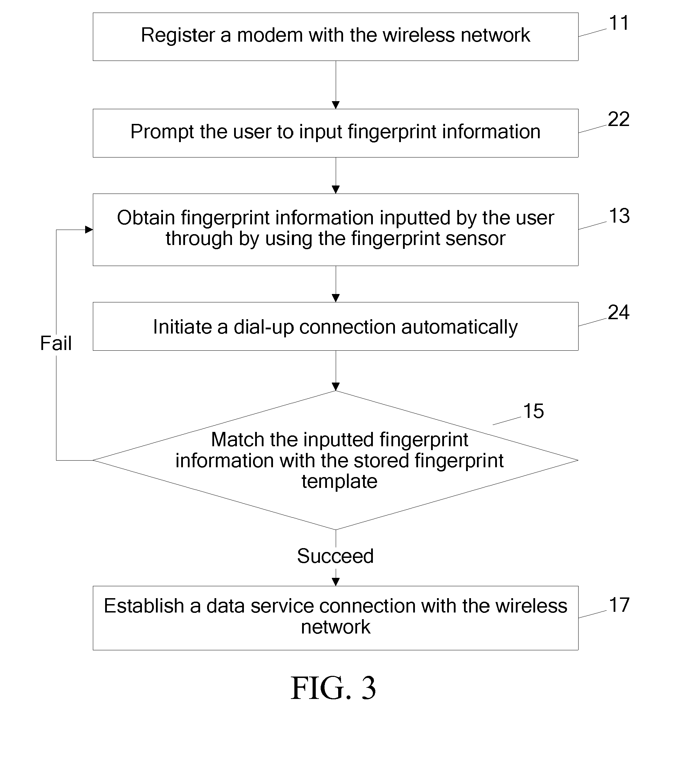

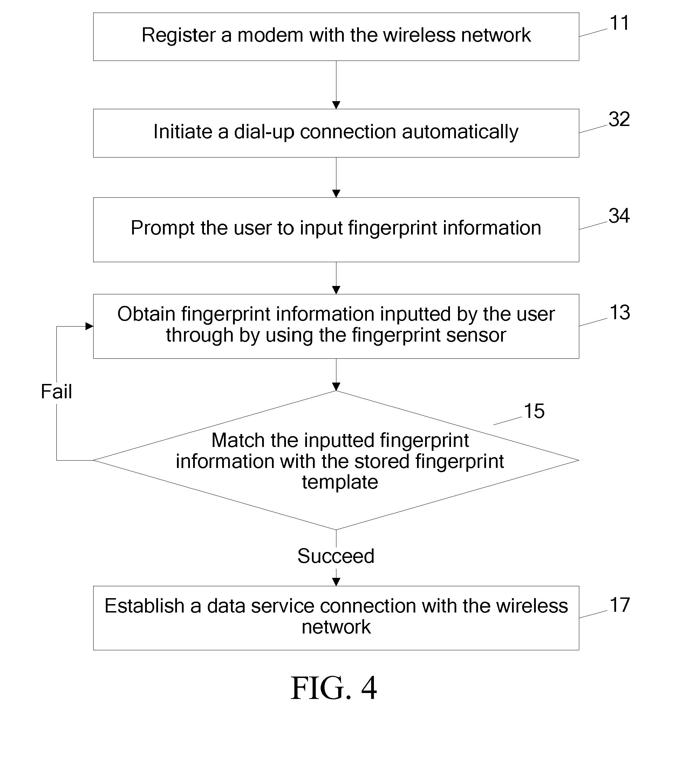

In addition, as Step 12 is optional, Step 12 may be omitted in other embodiments. For example, referring to FIG. 3, after Step 11 is performed, Step 22 is performed to prompt the user to input fingerprint information, or no operation is performed and the user is waited to input fingerprint information. When the fingerprint information inputted by the user is obtained by using the fingerprint sensor in Step 13, Step 24 is performed. In Step 24, the PC automatically initiates a dial-up connection and delivers the dial-up command to the wireless Internet access equipment. Alternatively, referring to FIG. 4, after Step 11 is performed, Step 32 is performed. In Step 32, the PC automatically initiates a dial-up connection and delivers the dial-up command to the wireless Internet access equipment. When or after the dial-up command is delivered, Step 34 may be performed to prompt the user to input fingerprint information, or no operation is performed and the user is waited to input the fingerprint information.

In Step 17, the performing the dial-up connection and establishing the data service connection with the wireless network by the wireless Internet access equipment may include the following steps. If the dial-up command has already been delivered to the wireless Internet access equipment before Step 17, the wireless Internet access equipment establishes a data service connection with the wireless network according to the dial-up command and the dial-up connection settings. Alternatively, if the dial-up command has not been delivered to the wireless Internet access equipment before Step 17, the wireless Internet access equipment first receives the dial-up command delivered by the PC, and then establishes a data service connection with the wireless network according to the dial-up command and the dial-up connection settings.

In other embodiments, it can be configured that different fingerprint information corresponds to different dial-up connection settings, that is, different fingerprint templates are bound to different dial-up connection settings respectively. Therefore, in Step 15, if the fingerprint information inputted by the user matches with one of the multiple stored fingerprint templates, in Step 17, the wireless Internet access equipment performs a dial-up connection and establishes a data service connection with the wireless network according to the dial-up connection settings corresponding to the matched fingerprint template. Thus, the fingerprint information of different fingers of the user can be bound to different dial-up connection settings, such as Access Point Name (APN) and authentication parameters. After the fingerprint authentication is performed and the fingerprint information is matched with the fingerprint template, corresponding dial-up connection settings can be found and a connection is initiated automatically in Step 17. By setting multiple fingerprint templates to bind different dial-up connection settings to the different fingerprint templates, various fingerprint dial-up modes can be provided for the same wireless Internet access equipment. Thus, the variety of the fingerprint authentication is improved and the flexibility of the dial-up of the wireless Internet access equipment is also improved.

It should be noted that, when the fingerprint authentication is used for the first time, it may be necessary to prompt the user to record a fingerprint template. The user inputs fingerprint information by using a fingerprint sensor, and the wireless Internet access equipment stores the fingerprint information collected by the fingerprint sensor as a fingerprint template, thus accomplishing the recording of the fingerprint template. In addition, for the wireless Internet access equipment, the above dial-up method of the wireless Internet access equipment may set to turn on or off the dial-up function of the wireless Internet access equipment of which the fingerprint authentication is successful. Therefore, the recording of the fingerprint template can also be performed when the dial-up function of the wireless Internet access equipment of which the fingerprint authentication is successful is turned on.

In this embodiment, specifically, the wireless Internet access equipment may be various modem equipment or modules that can connect the PC to the Internet via the wireless network such as a datacard, a wireless broadband module, a mobile phone, and a mobile Internet access terminal.

In this embodiment, the fingerprint information inputted by the user is obtained by using the fingerprint sensor, and the inputted fingerprint information is matched with the stored fingerprint template. When the matching is successful, a data service connection between the wireless Internet access equipment and the wireless network is established. Therefore, the dial-up function of the wireless Internet access equipment is protected by using the fingerprint authentication, so that it becomes very difficult to misappropriate the wireless Internet access equipment, and the security of the dial-up of the wireless Internet access equipment is improved. Moreover, as the wireless Internet access equipment automatically performs a dial-up connection when the fingerprint authentication is successful, the present invention provides a brand-new dial-up method of a wireless Internet access equipment, which can reduce the complexity of the dial-up connection and provide the availability and automation of the dial-up connection.

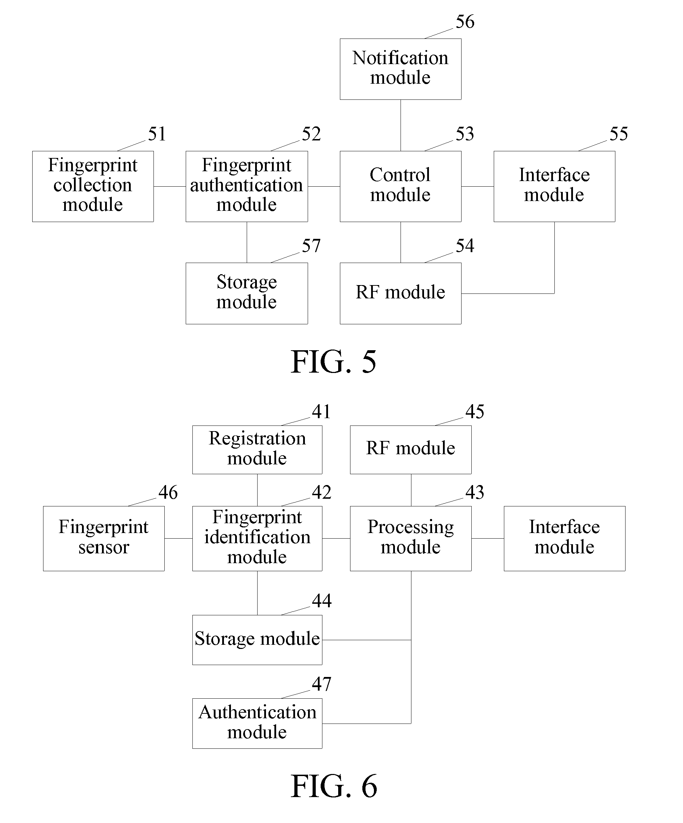

Device or Equipment Embodiment:
As shown in FIG. 5, in an embodiment, the present invention provides a fingerprint identification datacard, which includes a fingerprint collection module 51, a fingerprint authentication module 52, a control module 53, and an RF module 54.

The fingerprint collection module 51 is adapted to collect a user's fingerprint information by using a fingerprint scanner on the datacard.

The fingerprint authentication module 52 is adapted to compare the collected fingerprint information with the stored fingerprint template, determine whether the collected fingerprint information matches with the fingerprint template, and output a comparison result.

The control module 53 is adapted to control the datacard according to the comparison result outputted by the fingerprint authentication module 52.

The RF module 54 is adapted to establish a wireless connection with the Internet to receive and transmit data.

The corresponding control over the datacard in the above description may include the following. The user is authenticated through the fingerprint authentication. If the collected fingerprint information matches with the fingerprint template, it is determined that the authentication is successful, and the user corresponding to the collected fingerprint information is allowed to access the Internet by using the datacard. Otherwise, if the collected fingerprint information does not match with the fingerprint template, it is determined that the authentication is failed, and the user is not allowed to use the datacard. And/Or, one or more different fingerprint templates are stored, and each fingerprint template corresponds to a different operation. If the collected fingerprint information matched with any one of the fingerprint templates, the operation corresponding to the matched fingerprint template is performed. If the collected fingerprint information matches with none of the fingerprint templates, the datacard may perform no operation or notify the user that the fingerprint authentication is failed through the datacard or the user terminal connected to the datacard.

For the implementation that the user corresponding to the collected fingerprint information is allowed to access the Internet by using the datacard, this mode may include the following: The control module 53 may not execute the user's instructions (such as an instruction of connecting the Internet by using the RF module 54, or an instruction of reading data stored in the datacard and so on) before the authentication is successful. After the authentication is successful, the control module 53 enters a normal work state, and receives and executes the user's instructions, so that the user can access the Internet by using the datacard, or read and write the data stored in the datacard. Similarly, a case the user is not allowed to use the datacard can be as follows. The control module 53 does not execute the user's instructions, and thus does not accept the user's control over each module and function of the datacard. Since the user is not allowed to use the datacard if the collected fingerprint information does not match with the fingerprint template, the authentication of the datacard is achieved through the fingerprint authentication. The user is only allowed to use the datacard after the fingerprint is successfully matched, so that the right of using the datacard is effectively controlled.

As for the operations corresponding to the matched fingerprint templates, this mode may including the following:. If the datacard includes two or more RF modules 54, each RF module 54 corresponds to one or more fingerprint templates, and different RF modules 54 correspond to different fingerprint templates, according to the comparison result outputted by the fingerprint authentication module 52, the control module 53 is adapted to initiate the RF module 54 corresponding to the fingerprint template if the collected fingerprint information matches with one of the fingerprint templates, so that the datacard establishes a connection with the network by using the RF module 54 corresponding to the fingerprint template. If the collected fingerprint information matches with none of the fingerprint templates, the user is notified, through the datacard or a user terminal connected to the datacard, that the fingerprint authentication is failed. Alternatively, if the datacard includes one or more RF modules 54, each RF module 54 corresponds to one or more turnon fingerprint templates and corresponds to one or more turnoff fingerprint templates, and different RF modules 54 correspond to different fingerprint templates. The RF module 54 corresponding to the turnon fingerprint template is turned on if the collected fingerprint information matches with one of the turnon fingerprint templates, so that the datacard establishes a connection with the network through the RF module 54 corresponding to the turnon fingerprint template. The RF module 54 corresponding to the turnoff fingerprint template is turned off if the collected fingerprint information matches with one of the turnoff fingerprint templates, so that the connection between the datacard and the network through the RF module 54 corresponding to the turnoff fingerprint template is disconnected (if the RF module 54 corresponding to the turnoff fingerprint template does not establish a connection with the network, that is, the RF module 54 corresponding to the turnoff fingerprint template is in an "off' state, no operation is performed or the user is notified that the RF module 54 corresponding to the turnoff fingerprint template has already been turned off if the collected fingerprint information matches with the turnoff fingerprint template). If the collected fingerprint information matches with none of the turnon fingerprint templates or the turnoff fingerprint templates, the user is notified that the fingerprint authentication is failed through the datacard or the user terminal connected to the datacard. When the turnoff fingerprint templates are set and the user does not need to use the network, for example only a function of a Secure Digital Memory Card (SD card) of the wireless datacard is used, the user can choose to turn off the RF module 54 by fingerprinting, so as to avoid radiation and power consumption. For example, the user registers the left little finger as a turnoff fingerprint template to turn off the RF module 54. When the user swipes the left litter finger, the control module 53 will turn off the RF module 54, which will be turned on only when the user swipes the finger of relative functions. Since the RF module 54 is turned on after the fingerprint authentication is successful, the user can access the wireless network only after the fingerprint authentication is successful, so that the user's right for accessing the Internet by using the datacard is effectively controlled.

It should be noted that, if the datacard is a multi-mode datacard, the multi-mode datacard may include two or more RF modules, for example, any two or more of a GSM RF module, a WCDMA RF module, a CDMA RF module, a CDMA7000 RF module, and a Time Division-Synchronous Code Division Multiple Access (TD-SCDMA) RF module. For a multi-mode datacard, the user may choose different network services by registering different fingerprint templates. For example, for a datacard that supports both the GSM and the WCDMA, the user registers the left index finger to initiate the GSM network and registers the right index finger to initiate the WCDMA network. After inserting the datacard, the user swipes the left index finger to initiate the RF module of the GSM, and at this time, the user can search and register with the GSM network. Similarly, the user swipes the right index finger to initiate the RF module of the WCDMA to use the WCDMA network.

The above datacard further includes an interface module 55, adapted to connect the datacard to the user terminal through various interfaces (such as a USB interface), so that the user terminal can perform data transmission with the network by using the datacard. The interface module 55 here may be a cable interface (such as a USB interface) or a wireless interface (such as a Bluetooth interface).

In addition, the above datacard may further include a notification module 56, adapted to notify, through the datacard or the user terminal connected to the datacard, the user of the fingerprint authentication result.

In addition, the above datacard may further include a storage module 57, adapted to store the above fingerprint templates (including turnon fingerprint templates and/or turnoff fingerprint templates). The storage module 57 may be a memory or a non-volatile memory such as a Flash. The fingerprint templates stored in the storage module 57 may be inputted through the fingerprint collection module 51 and stored in the storage module 57 when the datacard is set. For example, when the user initiates the datacard for the first time, the datacard prompts the user to input respective fingerprint templates, and at this time stores the fingerprint information inputted by using the fingerprint collection module 51 in the storage module 57 as fingerprint templates. Alternatively, during the use of the datacard, the original fingerprint template is updated and replaced, and at this time the fingerprint information inputted by using the fingerprint collection module 51 is stored in the storage module 57 to replace the original fingerprint template. Before the update and replacement, it can be set that the update and replacement are only allowed when the user inputs the correct fingerprint information and the fingerprint authentication is successful.

It should be noted that, if the datacard only has one RF module 54, when the datacard is powered on, the RF module 54 immediately starts to search and register with the network, and the control module 53 does not allow the user to use the datacard. Next, after the fingerprint authentication is successful (that is, the collected fingerprint information matches with the fingerprint template), the control module 53 allows the user to use the datacard to perform data transmission through the wireless network connected by using the RF module 54. Alternatively, when the datacard is powered on, the control module 53 does not allow the user to use the datacard and the RF module is in an "off' state. Next, after the fingerprint authentication is successful, the RF module 54 starts to search and register with the network and the control module 53 allows the user to use the datacard. In the end, the user can perform data transmission through the wireless network connected by using the RF module 54.

In this embodiment, the user's fingerprint information is collected by using the fingerprint scanner on the datacard and compared with the stored fingerprint template, and then the datacard is controlled according to the comparison result outputted by the fingerprint authentication module. Therefore, the right control of the datacard is achieved through fingerprint authentication, and related functions of the datacard can only be used after successful fingerprint matching. Since the security of fingerprint authentication is much higher than the security of password authentication, the security of the datacard is improved, and it is effectively ensured that the datacard is not misappropriated. In addition, the fingerprint authentication is performed for the datacard, so even if the user changes an SIM card, the datacard still cannot be used as long as the fingerprint authentication is failed, so that the security of the datacard is further improved. Moreover, during fingerprint authentication the user does not need to remember a password and the network connection is automatically established upon successful fingerprint authentication. Therefore, it becomes more convenient for the user, and the complexity of the operations is reduced.

As shown in FIG. 6, in this embodiment, the present invention provides a wireless Internet access equipment, which includes a registration module 41, a fingerprint identification module 42, and a processing module 43.

The registration module 41 is adapted to register the wireless Internet access equipment with a wireless network.

The fingerprint identification module 42 is adapted to obtain fingerprint information inputted by a user by using a fingerprint sensor and match the inputted fingerprint information with a stored fingerprint template after the registration module 41 finishes registration.

The processing module 43 is adapted to perform a dial-up connection and establish a data service connection between the wireless Internet access equipment and the wireless network when the inputted fingerprint information matches with the stored fingerprint template in the fingerprint identification module 42.

Optionally, the wireless Internet access equipment may further include a storage module 44, adapted to store the fingerprint templates for modules such as the fingerprint identification module 42 and/or the processing module 43 to read and write. The storage module may be a memory or a non-volatile memory such as a Synchronous Dynamic Random Access Memory (SDRAM) and a flash chip.

Optionally, the wireless Internet access equipment may further include an RF module 45, adapted to send and receive wireless signals, and support a dial-up connection between the wireless Internet access equipment and the wireless network.

Optionally, the wireless Internet access equipment may further include a fingerprint sensor 46, adapted to obtain fingerprint information inputted by the user, and send the obtained fingerprint information to the fingerprint identification module 42. In other embodiments, the fingerprint sensor 46 may also not be integrated in the wireless Internet access equipment. For example, the fingerprint sensor 46 may be disposed in a PC or other equipments (such as a separated USB fingerprint sensor) and connected to the PC through various interfaces.

Optionally, the wireless Internet access equipment may further include an authentication module 47, adapted to perform PIN code authentication after the wireless Internet access equipment is powered on.

When the fingerprint authentication is used for the first time or a dial-up function of the wireless Internet access equipment is turned on, where the fingerprint authentication of the wireless Internet access equipment is successful, it may need to prompt the user to input a fingerprint template. At this time, the fingerprint identification module 42 may be further adapted to store the fingerprint information inputted by the user in the storage module 44 as a fingerprint template.

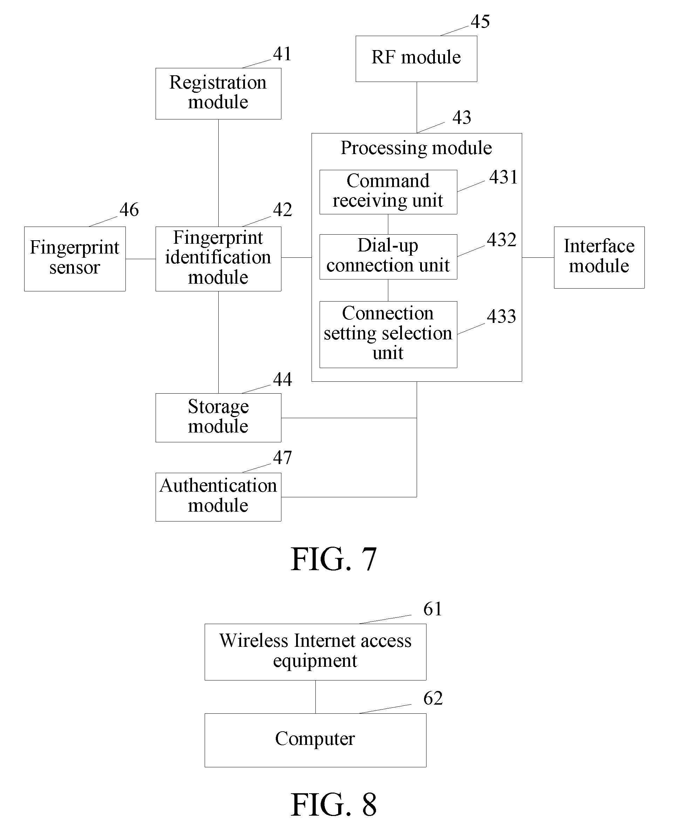

Referring to FIG. 7, the processing module 43 may further include a command receiving unit 431 and a dial-up connection unit 432. The command receiving unit 431 is adapted to receive a dial-up command delivered by the PC. The dial-up connection unit 432 is adapted to establish a data service connection between the wireless Internet access equipment and the wireless network according to the dial-up command and dial-up connection settings received by the command receiving unit 431. In addition, the occasion that the PC delivers the dial-up command may be referred to the related contents in the method embodiment, which will not be described here. Furthermore, the processing module 43 may further include a connection setting selection unit 433, adapted to read the dial-up connection settings bound to the matched fingerprint templates in the storage module 44 when binding different fingerprint templates to different dial-up connection settings respectively, so that the dial-up connection unit 432 establishes a data service connection between the wireless Internet access equipment and the wireless network according to the dial-up command and the dial-up connection settings bound to the matched fingerprint template.

In this embodiment, specifically, the wireless Internet access equipment may be various modem equipments or modules which can connect the PC to the Internet via the wireless network such as a datacard, a wireless broadband module, a mobile phone, and a mobile Internet access terminal.

In this embodiment, the fingerprint information inputted by the user is obtained by the fingerprint sensor, and the inputted fingerprint information is matched with the stored fingerprint template. When the matching is successful, a data service connection between the wireless Internet access equipment and the wireless network is established. Therefore, the dial-up function of the wireless Internet access equipment is protected by using the fingerprint authentication, so that it becomes very difficult to misappropriate the wireless Internet access equipment, and the security of the dial-up of the wireless Internet access equipment is improved. Moreover, since the wireless Internet access equipment automatically performs the dial-up connection without the user's intervention when the fingerprint authentication is successful, an embodiment of the present invention provides a brand-new dial-up method of the wireless Internet access equipment, so as to reduce the complexity of the dial-up connection and provide the availability and automation of the dial-up connection.

System Embodiment:
As shown in FIG. 8, in an embodiment, the present invention provides a wireless Internet access system, which includes a wireless Internet access equipment 61 and a computer 62.

The wireless Internet access equipment 61 is adapted to be registered with a wireless network. Fingerprint information inputted by a user is obtained by using a fingerprint sensor and matched with the stored fingerprint template. When the inputted fingerprint information matches with the stored fingerprint template, a dial-up connection is performed and a data service connection between the wireless Internet access equipment 61 and the wireless network is established.

The computer 62 is adapted to control the wireless Internet access equipment 61 to perform a dial-up connection, and perform data services by using the data service connection between the wireless Internet access equipment 61 and the wireless network.

The wireless Internet access equipment 61 and the computer 62 can be connected through various interfaces such as the USB, the ExpressCard, the Personal Computer Memory Card International Association (PCMCIA), or the Peripheral Controller Interface (PCI), and transmission of data and commands is performed.

The specific structure and operations of the wireless Internet access equipment 61 can be referred to the related contents in the device embodiment and the method embodiment, which will not be described here.

In this embodiment, the fingerprint information inputted by the user is obtained by using the fingerprint sensor and matched with the stored fingerprint template. When the matching is successful, a data service connection between the wireless Internet access equipment and the wireless network is established. Therefore, the dial-up function of the wireless Internet access equipment is protected by using the fingerprint authentication, so that it becomes very difficult to misappropriate the wireless Internet access equipment, and the security of the dial-up of the wireless Internet access equipment is improved. Moreover, since the wireless Internet access equipment automatically performs a dial-up connection without the user's intervention when the fingerprint authentication is successful, the present invention provides a brand-new dial-up method of the wireless Internet access equipment, which can reduce the complexity of the dial-up connection and provide the availability and automation of the dial-up connection.

Persons of ordinary skill in the art should understand that all or a part of the steps of the method according to the embodiments of the present invention may be implemented by a computer program instructing relevant hardware. The program may be stored in a computer readable storage medium. When the program is run, the steps of the method according to the embodiments of the present invention are performed. The storage medium may be a magnetic disk, an optical disk, a read-only memory (ROM), and a random access memory (RAM).

The above descriptions are merely preferred embodiments of the present invention, but not intended to limit the scope of the present invention. Any modification, equivalent replacement, or improvement made without departing from the spirit and principle of the present invention should fall within the scope of the present invention.

## Claims

1. A wireless Internet access equipment, comprising:
a fingerprint collection module (51), adapted to collect a user's fingerprint information by using a fingerprint scanner on the wireless Internet access equipment;
a fingerprint authentication module (52), adapted to compare the collected fingerprint information with a stored fingerprint template, and output a comparison result; and
a control module (53), adapted to control the wireless Internet access equipment according to the comparison result outputted by the fingerprint authentication module.

2. The wireless Internet access equipment according to claim 1, wherein,
the wireless Internet access equipment further comprises a radio frequency (RF) module (54), adapted to establish a wireless connection between the wireless Internet access equipment and a network to receive and transmit data; and
the controlling the wireless Internet access equipment comprises: if the collected fingerprint information matches with the fingerprint template, allowing the wireless Internet access equipment to be used to access the network to receive and transmit data.

3. The wireless Internet access equipment according to claim 1, wherein,
the wireless Internet access equipment further comprises an RF module (54), adapted to establish a wireless connection between the wireless Internet access equipment and a network to receive and transmit data; and
the controlling the fingerprint template comprises: if the collected fingerprint information matches with one fingerprint template, turning on an RF module corresponding to the fingerprint template, so that the wireless Internet access equipment establishes a connection with the network through the RF module corresponding to the fingerprint template; or, if the collected fingerprint information matches with a turnon fingerprint template, turning on an RF module corresponding to the turnon fingerprint template, so that the wireless Internet access equipment establishes a connection with the network through the RF module corresponding to the turnon fingerprint template; or if the collected fingerprint information matches with a turnoff fingerprint template, turning off an RF module corresponding to the turnoff fingerprint template, and disconnecting a connection between the wireless Internet access equipment and the network through the RF module corresponding to the turnoff fingerprint template.

4. The wireless Internet access equipment according to any one of claims 1 to 3, wherein the wireless Internet access equipment further comprises an interface, adapted to connect the wireless Internet access equipment to a user terminal through the interface, so that the user terminal can perform data transmission with the network by using the wireless Internet access equipment.

5. The wireless Internet access equipment according to any one of claims 1 to 4, wherein the wireless Internet access equipment further comprises a notification module (56), adapted to notify, through the wireless Internet access equipment itself or the user terminal connected to the wireless Internet access equipment, the user of a fingerprint authentication result.

6. The wireless Internet access equipment according to any one of claims 1 to 5, wherein the wireless Internet access equipment further comprises a storage module (57), adapted to store the fingerprint template.

7. The wireless Internet access equipment according to any one of claims 1 to 6, wherein the wireless Internet access equipment further comprises a registration module (41), adapted to register the wireless Internet access equipment with a wireless network when the comparison result is that the collected fingerprint information matches with the fingerprint template.

8. The wireless Internet access equipment according to any one of claims 1 to 6, wherein the wireless Internet access equipment further comprises a registration module (41), adapted to register the wireless Internet access equipment with a wireless network before collecting the user's fingerprint information.

9. The wireless Internet access equipment according to claim 7 or claim 8, wherein the wireless Internet access equipment further comprises a processing module (43), adapted to perform a dial-up connection and establish a data service connection between the wireless Internet access equipment and the wireless network, when the comparison result is that the collected fingerprint information matches with the stored fingerprint template and the wireless Internet access equipment registers with the wireless network.

10. The wireless Internet access equipment according to claim 9, wherein the processing module further comprises:
a command receiving unit (431), adapted to receive a dial-up command delivered by a computer; and
a dial-up connection unit (432), adapted to establish a data service connection between the wireless Internet access equipment and the wireless network according to the dial-up command received by the command receiving unit and dial-up connection settings.

11. The wireless Internet access equipment according to claim 10, wherein the processing module further comprises:
a connection setting selection unit (433), adapted to read a dial-up connection setting corresponding to a fingerprint template that matches with the inputted fingerprint information when multiple stored fingerprint templates are stored and each fingerprint template binds respective dial-up connection settings, so that the dial-up connection unit establishes a data service connection between the wireless Internet access equipment and the wireless network according to the dial-up command and the dial-up connection setting corresponding to the fingerprint template.

12. The wireless Internet access equipment according to any one of claims 1 to 11, wherein the wireless Internet access equipment is a datacard, a wireless broadband module, or a mobile Internet access terminal.

13. A wireless Internet access system, comprising a wireless Internet access equipment according to any one of claims 1 to 12 and a computer, wherein the wireless Internet access equipment and the computer are connected through an interface and perform data and command transmission; and
the computer is adapted to control the wireless Internet access equipment to perform a dial-up connection, and perform data service interaction by using a data service connection with a wireless network established by the wireless Internet access equipment.

14. A method for identifying a fingerprint with a wireless Internet access equipment, comprising:
collecting a user's fingerprint information by using a fingerprint scanner on the wireless Internet access equipment (71);
comparing the collected fingerprint information with a stored fingerprint template, and outputting a comparison result (72); and
controlling the wireless Internet access equipment according to the outputted comparison result (73).

15. The method according to claim 14, wherein the controlling the wireless Internet access equipment comprises:
if the collected fingerprint information matches with the fingerprint template, allowing the wireless Internet access equipment to be used to access the Internet to receive and transmit data; or
if the collected fingerprint information matches with one fingerprint template, performing an operation corresponding to the fingerprint template, or
if the collected fingerprint information matches with none of the fingerprint templates, performing, by the wireless Internet access equipment, no operation or notifying a user that the fingerprint authentication is failed by using the wireless Internet access equipment itself or a user terminal connected to the wireless Internet access equipment.

16. The method according to claim 15, wherein the performing an operation corresponding to the fingerprint template comprises:
if the collected fingerprint information matches with one fingerprint template, turning on a radio frequency (RF) module corresponding to the fingerprint template, so that the wireless Internet access equipment establishes a connection with a network through the RF module corresponding to the fingerprint template; or,
if the collected fingerprint information matches with a turnon fingerprint template, turning on an RF module corresponding to the turnon fingerprint template, so that the wireless Internet access equipment establishes a connection with the network through the RF module corresponding to the turnon fingerprint template; or
if the collected fingerprint information matches with a turnoff fingerprint template, turning off an RF module corresponding to the turnoff fingerprint template, and disconnecting a connection between the wireless Internet access equipment and the network through the RF module corresponding to the turnoff fingerprint template.

17. The method according to any one of claims 14 to 16, wherein the method further comprises: sending a notification to the user through the wireless Internet access equipment itself or a user terminal connected to the wireless Internet access equipment to notify the user of a fingerprint authentication result.

18. The method according to any one of claims 14 to 17, wherein the controlling the wireless Internet access equipment comprises:
registering the wireless Internet access equipment with a wireless network and establishing a connection with the wireless network when the comparison result is that the collected fingerprint information matches with the stored fingerprint template.

19. The method according to any one of claims 14 to 17, wherein the method further comprises:
registering the wireless Internet access equipment with a wireless network before collecting the user's fingerprint information.

20. The method according to claim 19, wherein, when the comparison result is that the collected fingerprint information successfully matches with the stored fingerprint template, and the wireless Internet access equipment registers with the wireless network, performing a dial-up connection and establish a data service connection between the wireless Internet access equipment and the wireless network.

21. The method according to claim 20, wherein after the registering the wireless Internet access equipment with the wireless network, or after the obtaining the fingerprint information inputted by the user by using the fingerprint sensor, or when the inputted fingerprint information successfully matches with the stored fingerprint template, the method further comprises:
receiving, by the wireless Internet access equipment, a dial-up command delivered by a computer; and
the performing, by the wireless Internet access equipment, the dial-up connection and establishing the data service connection with the wireless network comprises: establishing, by the wireless Internet access equipment, a data service connection with the wireless network according to the delivered dial-up command and dial-up connection settings.

22. The method according to claim 21, wherein when multiple fingerprint templates are stored, and each fingerprint template binds respective dial-up connection settings, the method further comprises:
reading a dial-up connection setting corresponding to a fingerprint template that matches with the inputted fingerprint information, wherein the corresponding dial-up connection setting is used for dial-up connection by the wireless Internet access equipment, so as to establish a data service connection with the wireless network.
